# EUROPEAN PATENT APPLICATION

(11) **EP 2 784 457 A1**
(43) Date of publication of application: **01.10.2014**
(21) Application number: 14162220.9
(22) Date of filing: 28.03.2014
(51) Int. Cl.: G01J 3/02, G01N 21/73

(54) **Fiber-based ICP optical emission spectrometer**

(30) Priority: 28.03.2013 JP 2013069440
(71) Applicant: Hitachi High-Tech Science Corporation, Tokyo 105-0003 (JP)
(72) Inventor: Matsuzawa, Osamu, Tokyo 105-0003 (JP); Akamatsu, Kenichi, Tokyo 105-0003 (JP); Ikku, Yutaka, Tokyo 105-0003 (JP)
(74) Representative: Miller Sturt Kenyon

(57) **Abstract**

An ICP optical emission spectrometer (1) includes an inductively coupled plasma device configured to atomize or ionize a target element using inductively coupled plasma (18) to obtain an atomic emission line, a spectroscope (30) configured to receive and detect the atomic emission line while spectrally dispersing the atomic emission line, and an optical fiber (20) connecting the inductively coupled plasma device and the spectroscope to each other. A light emission hole (41) for emitting an atomic emission line from the optical fiber toward the spectroscope is disposed adjacent to an end face of the optical fiber.

## Description

### TECHNICAL FIELD

The present invention relates to a high frequency Inductively Coupled Plasma (ICP) optical emission spectrometer for analyzing elements (for example, a trace impurity element) included in a solution sample.

### BACKGROUND ART

There has been known that, in ICP optical emission spectrometry, a solution sample is atomized or ionized by Inductively Coupled Plasma (ICP), and an atomic emission line (spectrum line) emitted at that time is spectrally analyzed to conduct quantitative analysis and qualitative analysis on a trace impurity element. The atomic emission line is condensed by a lens, a mirror or the like and then enters a spectroscope through an incident slit. In a case where a shielding member is provided between the inductively coupled plasma and the spectroscope, multiple mirrors have to be used, which require an expensive and complicated structural arrangement. Thus, there has been known a method which introduces the atomic emission line to the spectroscope using optical fibers (JP-A-S63-47622 and JP-A-H10-142156).

JP-A-S63-47622 shown in Fig. 8A relates to a spectroscope R configured by a Roland circle used in the ICP optical emission spectrometry. A light emitted from a plasma light source L is introduced into condensing elements f1, f2 and f3 through multiple optical fibers F1, F2 and F3, and is condensed to light entrance slits S1, S2 and S3. Then, the light is introduced into a single light exit slit So by a concave diffraction grating G disposed in the spectroscope R. JP-AS63-47622 discloses that the spectroscope R can be made compact by using the single light exit slit So.

JP-A-H10-142156 shown in Fig. 8B relates to an optical fiber 102 which introduces an analysis light of an optical emission spectrometer into a spectroscope 101. One end of the optical fiber 102 is disposed at a position corresponding to a light emitting portion 103 in order to receive light from the light emitting portion 103, while it exists at the focal position of a condenser lens 104. The other end of the optical fiber 102 is arranged in a slit shape within the spectroscope 101 and corresponds to a slit 105.

It is disclosed that the light of the light emitting portion 103 is condensed in a direction along the center axis thereof, the light is introduced into the spectroscope 101 in a slit shape through the optical fiber 102, and the emission in the center axis portion having a large amount of emission generated from a sample is used effectively, thereby allowing highly sensitive spectroscopic analysis.

JP-A-S63-47622 and JP-A-H10-142156 disclose that the optical fiber and slit are used in order to introduce an atomic emission line from the inductively coupled plasma to the spectroscope. In actual production, it is necessary to consider the specific connection of them to the spectroscope and the optical relationship between the slit and a concave mirror. However, JP-A-S63-47622 and JP-A-H10-142156 do not describe those in a specific manner.

### SUMMARY OF THE INVENTION

The present invention has been made in view of the above-described circumstances, and an object of the present invention is to provide an ICP optical emission spectrometer which introduces an atomic emission line into a spectroscope using an optical fiber to achieve excellent optical characteristics.

According to an illustrative embodiment of the present invention, there is provided an ICP optical emission spectrometer comprising: an inductively coupled plasma device configured to atomize or ionize a target element using inductively coupled plasma to obtain an atomic emission line; a spectroscope configured to receive and detect the atomic emission line while spectrally dispersing the atomic emission line; and an optical fiber connecting the inductively coupled plasma device and the spectroscope to each other, wherein a light emission hole for emitting an atomic emission line from the optical fiber toward the spectroscope is disposed adjacent to an end face of the optical fiber.

The above ICP optical emission spectrometer may further comprise a cap configured to cover a light transmitting portion which is exposed in an end portion of the optical fiber and includes the end face, and an attaching member configured to cover the cap and to be attached to the spectroscope. The light emission hole may be formed in the cap to be positioned adjacent to the exposed light transmitting portion.

The above ICP optical emission spectrometer may further comprise an attaching member configured to cover a light transmitting portion which is exposed in the end portion of the optical fiber and includes the end face, and is configured to be attached to the spectroscope. The light emission hole may be formed in the attaching member to be positioned adjacent to the exposed light transmitting portion.

In the above ICP optical emission spectrometer, the light emission hole may have an expanding shape.

In the above ICP optical emission spectrometer, a distance between the light emission hole and the optical fiber may be zero.

### EFFECTS OF THE INVENTION

According to the above configuration, since the optical fiber is used, the arrangement flexibility of a spectroscope and inductively coupled plasma can be increased. Also, since the light emission hole and the end face are disposed adjacent to each other, an atomic emission line radiation area can be secured to have a sufficient light quantity for the reflection effective aperture of the concave mirror, whereby stable analysis sensitivity can be obtained. Further, providing of the attaching member can facilitate the alignment of the central axes of the optical fiber light transmitting portion and light emission hole and thus can eliminate fine adjustments, whereby optically stable positioning can be attained.

Further, deviations in the radiation area of the atomic emission line falling on the concave mirror can be reduced, thereby being able to provide an ICP optical emission spectrometer which is highly sensitive and has excellent optical characteristics.

### BRIEF DESCRIPTION OF THE DRAWINGS

The above and other aspects of the present invention will become more apparent and more readily appreciated from the following description of illustrative embodiments of the present invention, which are given by way of example only, taken in conjunction with the attached drawings, in which:
Fig. 1 is a conceptual view showing an example of an ICP optical emission spectrometer according to an illustrative embodiment;
Fig. 2 is a section view showing an example of an attaching member regarded as a basis of an attaching member according to an illustrative embodiment of the present invention;
Figs. 3A and 3B are schematic views showing the relationship of the end face of an optical fiber, a light emission hole and a concave mirror, wherein Fig. 3A shows a distance relationship between the end face and light emission hole, and Fig. 3B shows the deviation relationship between the central axes of the optical fiber and light emission hole;
Figs. 4A and 4B show an example of the attaching member according to a first illustrative embodiment, wherein Fig. 4A is an exploded view, and Fig. 4B is a section view in an assembled state;
Fig. 5 is a section view of an example of the attaching member in the assembled state according to a second illustrative embodiment of the present invention;
Fig. 6 is a section view of an example of the attaching member in the assembled state according to a third illustrative embodiment of present invention;
Figs. 7A and 7B are schematic views showing the relationship of the end face of the optical fiber, the light emission hole and the concave mirror according to an illustrative embodiment, wherein Fig. 7A shows the distance relationship between the end face of the optical fiber and light emission hole, and Fig. 7B shows the deviation relationship between the center axes of the optical fiber and light emission hole; and

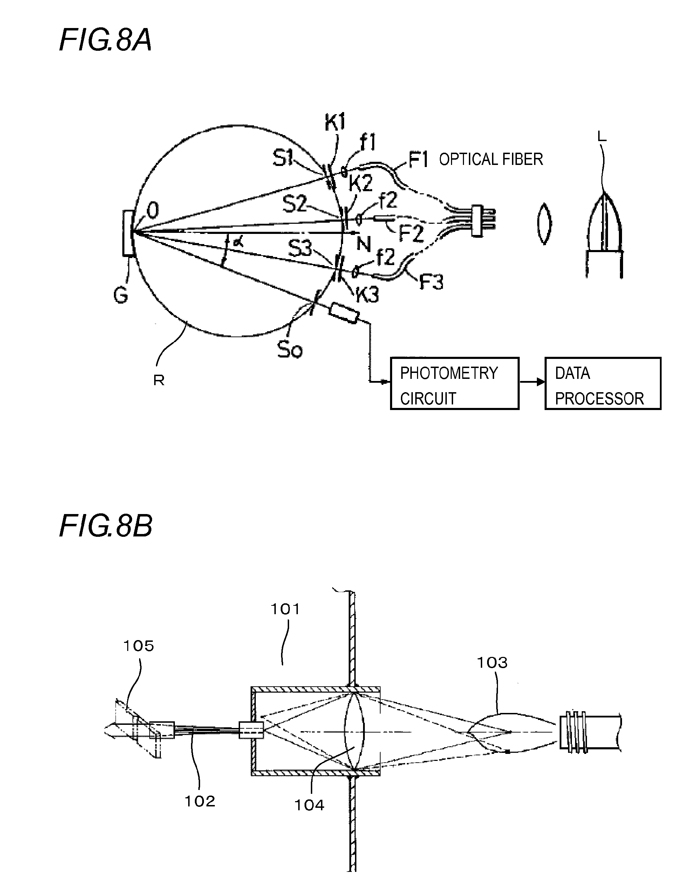

Figs. 8A and 8B are conceptual views of a prior-art ICP optical emission spectrometer, wherein Fig. 8A and Fig. 8B show JP-A-S63-47622 and JP-A-H10-142156, respectively.

### DETAILED DESCRIPTION

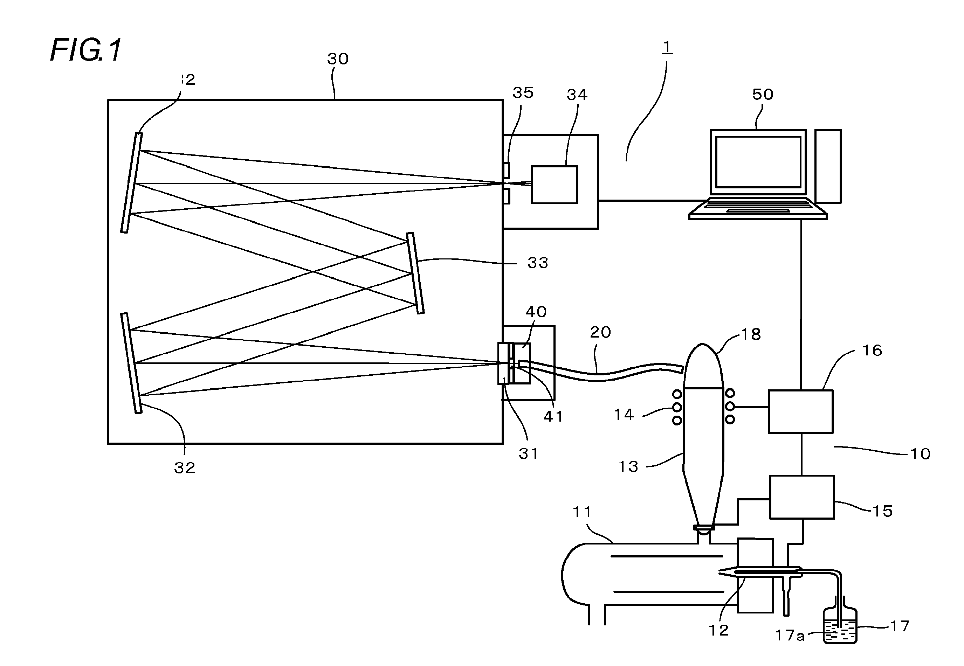

There will be described an ICP optical emission spectrometer according to illustrative embodiments of the present invention while referring to Figs. 1 to 7B.

Fig. 1 is a conceptual view of an example of an ICP optical emission spectrometer according to an illustrative embodiment.

The ICP optical emission spectrometer 1 substantially includes an inductively coupled plasma device 10, an optical fiber 20, a spectroscope 30, an attaching member 40, and a light emission hole 41. The inductively coupled plasma device 10 substantially includes a spray chamber 11, a nebulizer 12, a plasma torch 13, a high frequency coil 14, a gas control portion 15 and a high frequency power source 16. The optical fiber 20 is disposed between an inductively coupled plasma 18 (described later) and the spectroscope 30 and is connected to the spectroscope 30 by the attaching member 40. The spectroscope 30 includes an entrance window 31, a concave mirror 32, a diffraction grating 33 and a detector 34.

Argon gas controlled by the gas control portion 15 is introduced to the plasma torch 13. When the high frequency power source 16 applies a high frequency current to the high frequency coil 14, the argon gas generates inductively coupled plasma 18 (which is hereinafter referred to as plasma) above the plasma torch 13. On the other hand, a carrier gas (argon gas) supplied into the nebulizer 12 is ejected from the tip end of the nebulizer 12, a solution sample 17a in a sample container 17 is suctioned due to the negative pressure of the carrier gas, and the sample is ejected from the tip end of the nebulizer 12. The ejected solution sample 17a, the particles of which are uniformed and the air flow of which is stabilized within the spray chamber 11, is controlled by the gas control portion 15 and is introduced to the plasma torch 13. The sample molecules (or atoms) of the solution sample 17a is heated and excited within the plasma 18, thereby emitting light.

An atomic emission line, which is generated when the target element of the solution sample 17a is atomized or ionized by the plasma 18, passes through the optical fiber 20 and light emission hole 41, and enters the spectroscope 30 from the entrance window 31. The atomic emission line is spectrally dispersed by the concave mirror 32 and diffraction grating 33 within the spectroscope 30, passes through an exit hole 35 and is detected by the detector 34. The atomic emission line dispersed and detected by the spectroscope 30 is data-processed and analyzed by a computer 50 or the like. The qualitative analysis of an element (for example, a trace impurity element) included in the solution sample 17a is conducted based on a wavelength of the atomic emission line (spectral line), and the quantitative analysis of the element is conducted based on an intensity of the atomic emission line (spectral line).

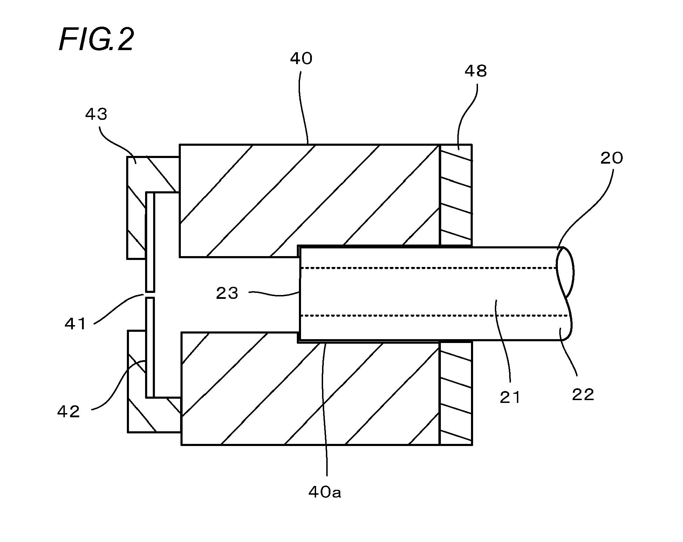

Fig. 2 is a section view of an example of an attaching member regarded as a basis of an attaching member according to an illustrative embodiment of the present invention.

The attaching member 40 is, for example, a substantially cylindrical-shaped metal molded product which is used to attach the optical fiber 20 at a position optically suitable for the entrance window 31 of the spectroscope 30 and the light emission hole 41 disposed near the entrance window 31. The attaching member 40 includes an insertion portion 40a for insertion of the optical fiber 20 having a light transmitting portion 21 configured by a core and a cladding and a coating portion 22 made of resin or the like. A flat plate 42 is disposed within an engaging portion 43 to be fixedly engaged with the front portion of the attaching member 40 substantially correspondingly to the central axis of the end face 23 of the optical fiber 20, while the light emission hole 41 is formed substantially in the center of the flat plate 42. Also, an optical fiber connector 48 for fixing the optical fiber 20 to the attaching member 40 is fixedly engaged with the attaching member 40. The engaging portion 43, together with the flat plate 42 having the light emission hole 41, is integrally fixed to the entrance window 31 of the spectroscope 30. Herein, the engaging portion 43 may not be fixedly engaged with the attaching member 40 but may be fixed to the entrance window 31 of the spectroscope 30. It may also be configured such that it can be directly fixedly attached to the spectroscope 30 and may not always include the entrance window 31.

Providing of the attaching member 40 can facilitate the matching of the central axes of the light transmitting portion 21 of the optical fiber 20 and light emission hole 41, thereby allowing the optically stable positioning of the optical fiber 20 without need for fine adjustments. Also, handling can become easy and need for adjustments by a skilled person are not necessary, and further, replacement of component parts can become easy.

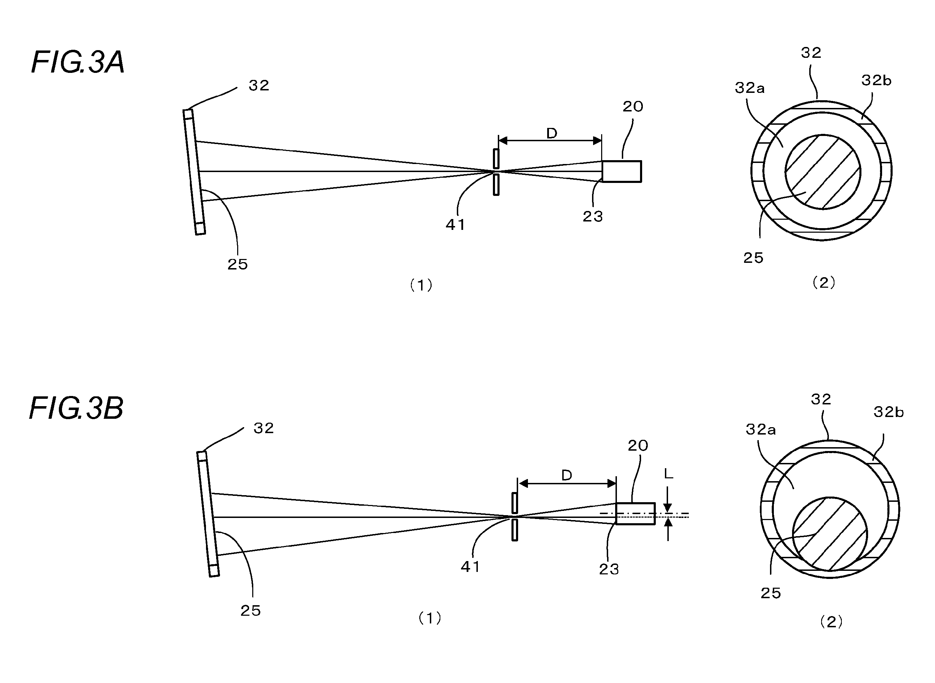

Here, if the distance D between the light emission hole 41 and the end face 23 of the optical fiber 20 were longer, or if the deviation L between the central axes of the optical fiber 20 and light emission hole 41 were large, the effective utilization rate of the atomic emission line falling on the concave mirror 32 would be deteriorated. This is described more specifically referring to Figs. 3A and 3B. Figs. 3A and 3B are schematic views of the relationship between the end face 23, the light emission hole 41 and the concave mirror 32.

Fig. 3A shows the relationship of the distance D between the end face 23 and light emission hole 41. The atomic emission line emitted from the end face 23 of the optical fiber 20 is condensed in the light emission hole 41 and falls on the concave mirror 32 in a given radiation area 25 (a circular area shown by oblique lines in Fig. 3A). However, when the distance D is large, the radiation area 25 is smaller than the reflection effective aperture 32a of the concave mirror 32. Here, a reference character 32b designates the frame of the concave mirror 32. Also, as shown in Fig. 3B, the deviation L between the center axes of the optical fiber 20 and light emission hole 41 is large, the radiation area 25 can possibly come off the aperture 32a of the concave mirror 32.

Next, there will be described an attaching member according to first to third illustrative embodiments, which is further improved in order to solve the situations explained in Figs. 3A and 3B.

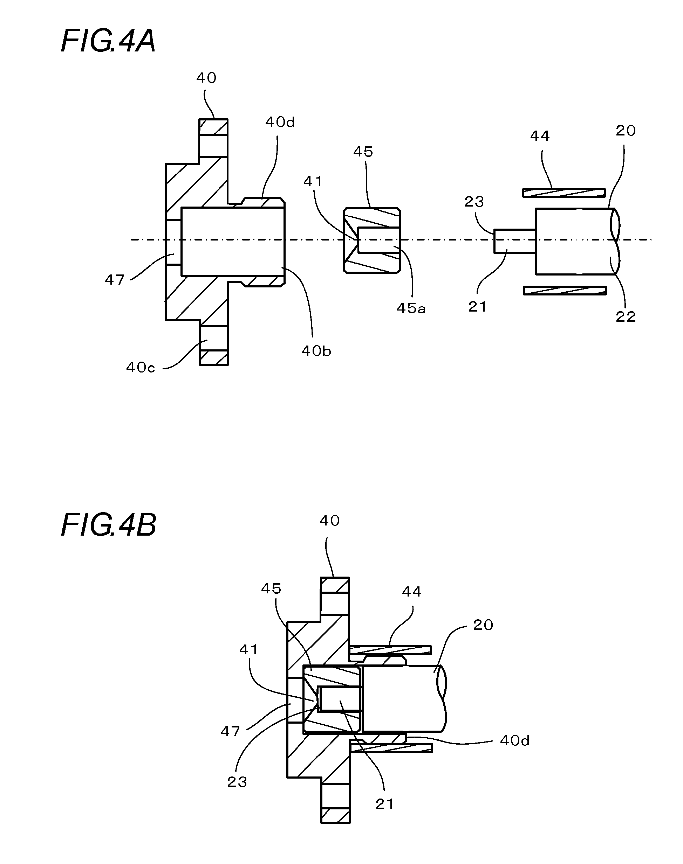

Figs. 4A and 4B show an example of the attaching member 40 according to the first illustrative embodiment. Specifically, Fig. 4A is an exploded view, and Fig. 4B is a section view in an assembled state. The same component parts as in the above illustrative embodiment are given the same designations and thus the description thereof is omitted.

In this illustrative embodiment, there is provided a cap 45 having a light emission hole 41. The attaching member 40 includes an opening 40b for insertion of the cap 45 and optical fiber 20, a support portion 40d for supporting the optical fiber 20 inserted into the opening 40b, an attaching portion 40c for fixing the attaching member 40 to the entrance window 31, and an optical passage 47 through which the light emitted from the optical fiber 20 passes. The cap 45 includes the light emission hole 41 having an outward expanding shape and an engaging portion 45a for engagement of the light transmitting portion 21 of the optical fiber 20. An end portion of the light transmitting portion 21 of the optical fiber 20 is exposed, and the exposed light transmitting portion 21 and an end face 23 are covered by the engaging portion 45a of the cap 45. A locking portion 44 is a cylindrical-shaped member for fixing the optical fiber 20 to the attaching member 40, while the locking portion 44, the attaching member 40 and the optical fiber 20 are fixed using screws (not shown) or the like.

The exposed light transmitting portion 21 of the optical fiber 20 is covered with the cap 45, the cap 45 is inserted into the opening 40b of the attaching member 40, and the locking portion 44 is fixed to the attaching member 40, whereby the end face 23 of the optical fiber 20 and light emission hole 41 can be disposed adjacent to each other (Fig. 4B). Since the light emission hole 41 is formed in the cap 45, and the cap 45 and opening 40b are used to support the exposed light transmitting portion 21, the deviation of the axis of the light transmitting portion 21 can be prevented and also the end face 23 and light emission hole 41 can be disposed adjacent to each other, thereby allowing the attaching of the optical fiber 20 with less optical loss.

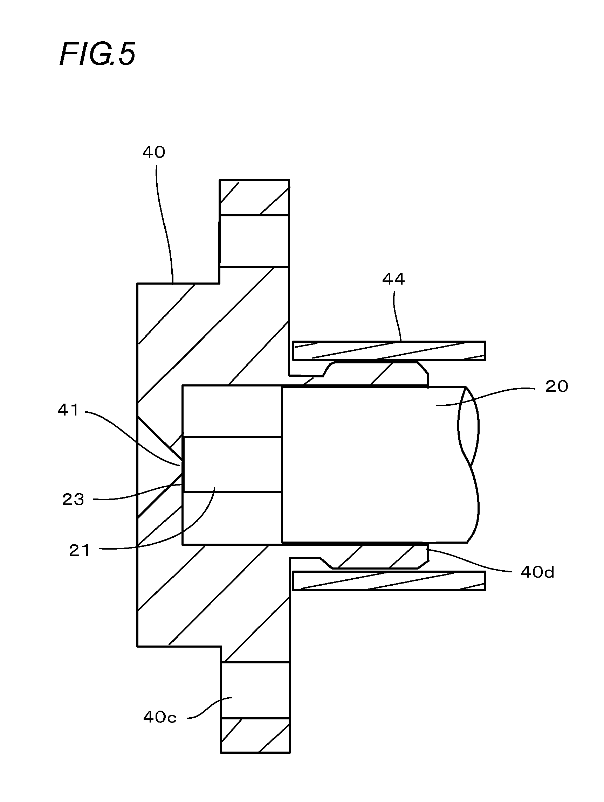

Fig. 5 is a section view of an example of the attaching member 40 in the assembled state according to the second illustrative embodiment. The same component parts thereof as in the first illustrative embodiment are given the same designations and thus the description thereof is omitted.

The attaching member 40 includes a light emission hole 41 having an outward expanding shape and a support portion 40d for supporting the optical fiber 20 after inserted therein. The tip end portion of the optical fiber 20 is inserted into the support portion 40d, and the optical fiber 20 is fixed to the attaching member 40 using the locking portion 44, whereby the end face 23 of the light transmitting portion 21 can be disposed adjacent to the light emission hole 41. The light emission hole 41 is formed in the attaching member 40, so that the positioning of the optical fiber can be stabilized, thereby allowing the attaching of the optical fiber 20 with less optical loss.

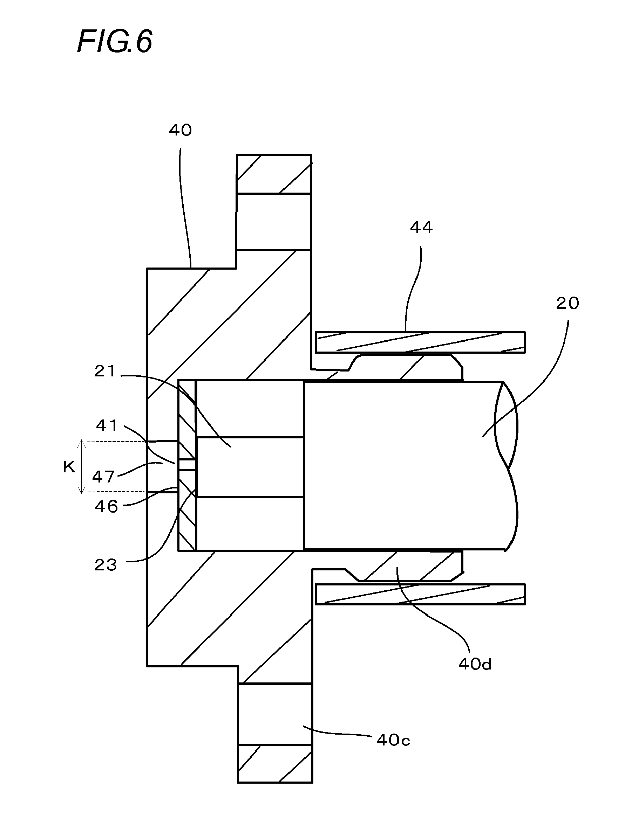

Fig. 6 is a section view of an example of the attaching member 40 in the assembled state according to the third illustrative embodiment. The same component parts thereof as in the first and second illustrative embodiments are given the same names and designations and thus the description thereof is omitted.

The light emission hole 41 is formed in a thin plate 46 at a substantially center thereof. The thin plate 46 is disposed in the bottom of the support portion 40d. The tip end portion of the optical fiber 20 is inserted into the support portion 40d and the optical fiber 20 is fixed to the attaching member 40 using the locking portion 44, whereby the end face 23 of the light transmitting portion 21 can be disposed adjacent to the light emission hole 41. Simply by inserting the thin plate 46 and optical fiber 20 into the support portion 40d, the central axes of the light transmitting portion 21 and light emission hole 41 can be aligned with each other, thereby being able to facilitate the adjacent arrangement of the end face 23 and light emission hole 41.

In this illustrative embodiment, unlike the first illustrative embodiment, the light emission hole 41 does not have an outward expanding shape nor has the optical passage 47 an outward expanding shape. However, the diameter K of the outermost portion (the left end in Fig. 6) of the optical passage 47 has to be larger than the expanding diameter when the light exists.

In the end portion of the optical fiber 20 of the second and third illustrative embodiments, the transmitting portion 21 may be exposed or may not be exposed. For forming exposing portion, a hot stripper or the like can be used. Generally, most of optical fibers are covered with a protection layer having a three-layer structure (a primary cover layer, a buffer layer and a secondary cover layer), while the secondary cover layer or buffer layer may be omitted. At least when one or more cover layers are removed, a holding member (having a similar shape to the cap 45) for covering the exposed portion may also be provided.

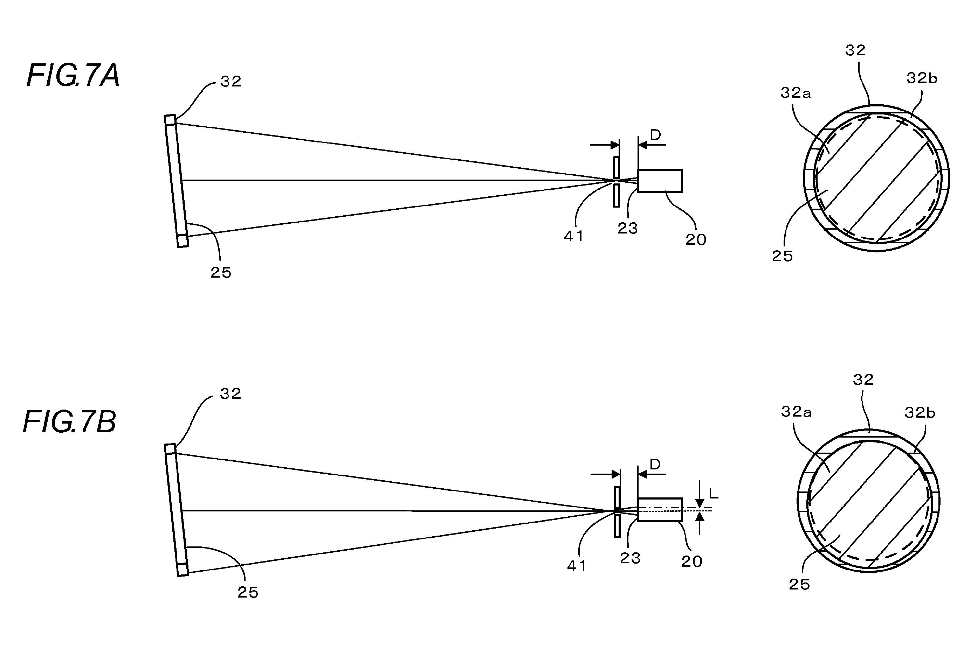

Figs. 7A and 7B are schematic views showing the relationship of the end face, the light emission hole and concave mirror.

Fig. 7A shows the relationship of the distance D between the end face 23 and light emission hole 41. An atomic emission line emitted from the end face 23 of the optical fiber 20 is condensed in the light emission hole 41 and is radiated on the concave mirror 32 in a given radiation range 25. When the distance D is small and the end face 23 and light emission hole 41 are disposed adjacent to each other, the radiation area 25 is larger than the reflection effective aperture 32a (see a circle shown by broken lines in Fig. 7A) of the concave mirror 32, and thus, a light quantity for conducting satisfactory analysis can be obtained in the spectroscope 30. Also, as shown in Fig. 7B, even when there is generated the deviation L between the center axes of the optical fiber 20 and light emission hole 41, the radiation area 25 cannot come off the aperture 32a of the concave mirror 32.

That is, using the attaching member 40 can facilitate the alignment of the center axes of the optical fiber 20 and light emission hole 41, allows the adjacent arrangement of the end face 23 and light emission hole 41 in assembling, can secure the atomic emission line radiation area 25 equal to or larger than the aperture 32a of the concave mirror 32 in the spectroscope 30, and can obtain a sufficient light quantity necessary for analysis, thereby being able to provide an excellent ICP optical emission spectrometer having stable analysis sensitivity.

In the above, the expression "adjacent (to each other)" may include a state where the end face 23 of the light transmitting portion 21 and light emission hole 41 are in contact with each other (the distance is zero) and may be a range of the distance D that the radiation area 25 of the atomic emission line to be radiated on the concave mirror 32 can be secured to be equal to or larger than the aperture 32a of the concave mirror 32.

While the present invention has been shown and described with reference to certain illustrative embodiments thereof, it will be understood by those skilled in the art that various changes in form and details may be made therein without departing from the scope of the invention as defined by the appended claims.

### Industrial Applicability

The ICP optical emission spectrometer of this disclosure can be applied to, for example, a use in which, when an atomic emission line is made to enter a spectroscope using an optical fiber, an incident light is radiated on a concave mirror efficiently using a light emission hole.

## Claims

1. An ICP optical emission spectrometer comprising:
an inductively coupled plasma device configured to atomize or ionize a target element using inductively coupled plasma to obtain an atomic emission line;
a spectroscope configured to receive and detect the atomic emission line while spectrally dispersing the atomic emission line; and
an optical fiber connecting the inductively coupled plasma device and the spectroscope to each other,
wherein a light emission hole for emitting an atomic emission line from the optical fiber toward the spectroscope is disposed adjacent to an end face of the optical fiber.

2. The ICP optical emission spectrometer according to claim 1, further comprising:
a cap configured to cover a light transmitting portion which is exposed in an end portion of the optical fiber and includes the end face; and
an attaching member configured to cover the cap and to be attached to the spectroscope,
wherein the light emission hole is formed in the cap to be positioned adjacent to the exposed light transmitting portion.

3. The ICP optical emission spectrometer according to claim 1, further comprising:
an attaching member configured to cover a light transmitting portion which is exposed in the end portion of the optical fiber and includes the end face, and is configured to be attached to the spectroscope,
wherein the light emission hole is formed in the attaching member to be positioned adjacent to the exposed light transmitting portion.

4. The ICP optical emission spectrometer according to any one of claims 1 to 3, wherein the light emission hole has an expanding shape.

5. The ICP optical emission spectrometer according to any one of claims 1 to 4, wherein a distance between the light emission hole and the optical fiber is zero.
